(19) Europäisches Patentamt
European Patent Office
Office européen des brevets

(11) Numéro de publication : **0 015 860**
**B1**

(12) # FASCICULE DE BREVET EUROPÉEN

(45) Date de publication du fascicule du brevet : **13.10.82**

(51) Int. Cl.[3] : **C 08 G 59/06**

(21) Numéro de dépôt : **80420027.7**

(22) Date de dépôt : **29.02.80**

(54) **Procédé de préparation de polyéthers glycidiques de polyphénols.**

(30) Priorité : **02.03.79 FR 7905919**

(43) Date de publication de la demande :
**17.09.80 (Bulletin 80/19)**

(45) Mention de la délivrance du brevet :
**13.10.82 Bulletin 82/41**

(84) Etats contractants désignés :
**AT BE CH DE FR GB IT NL SE**

(56) Documents cités :
**DE B 1 081 666**
**DIE MAKROMOLEKULARE CHEMIE, vol. 179, no. 7, 7 juillet 1978, pages 1661-1671 G. ROKICKI et al. : « The synthesis of epoxy resins in dipolar aprotic solvents ».**

(73) Titulaire : **RHONE-POULENC CHIMIE DE BASE**
**25, quai Paul Doumer**
**F-92408 Courbevoie (FR)**

(72) Inventeur : **Soula, Gérard**
**33, rue Nungesser**
**F-69330 Meyzieu (FR)**
Inventeur : **Locatelli, Jean-Louis**
**Les Charavelles 10, rue de Charavel**
**F-38200 Vienne (FR)**

(74) Mandataire : **Varniere-Grange, Monique et al**
**RHONE-POULENC RECHERCHES Centre de Recherches de Saint-Fons Service Brevets B.P. 62**
**F-69190 Saint-Fons (FR)**

**EP 0 015 860 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

Procédé de préparation de polyéthers glycidiques de polyphénols

La présente invention a pour objet un procédé de préparation de polyéthers glycidiques de polyphénols, à partir de sels alcalins de polyphénols et de halo-1 époxy-2,3 alcanes.

Ces éthers sont plus couramment désignés par l'expression « résines époxydes ». Ces résines constituent une classe de produits caractérisés par la présence de cycles oxirannes 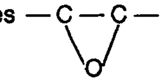 qui conduisent, après réticulation, à des systèmes dont les propriétés sont remarquables en divers points. Ceci a largement contribué au développement de ce type de résines, dans de nombreux domaines d'application.

Parmi ces résines, celles qui sont traditionnellement issues de la réaction du bisphénol-A [bis(hydroxy-4 phényl)-2,2 propane] et de l'épichlorhydrine présentent un intérêt tout particulier.

La présente invention a donc pour objet un procédé de préparation d'éthers glycidiques, notamment du bisphénol-A, par réaction en milieu anhydre et aprotique de sels alcalins de polyphénols et de halo-1 époxy-2,3 alcanes.

Un autre objet de l'invention est de fournir un procédé de préparation de résines ayant une viscosité mesurée à 25 °C inférieure ou égale à 10 Pa.s.

Ce type de résines est conventionnellement préparé par réaction du bisphénol-A, sur de l'épichlorhydrine, en présence d'eau et d'un agent alcalin. De très nombreux procédés ont été décrits dans des travaux antérieurs.

Par exemple, le brevet des Etats-Unis d'Amérique 2 801 227 enseigne un procédé de fabrication d'éther diglycidique de polyphénols. Ce procédé consiste à ajouter une solution aqueuse d'hydroxyde alcalin à une solution de polyphénol dans de l'épichlorhydrine, à raison d'au moins 3 moles d'épichlorhydrine par équivalent hydroxyle du phénol. L'eau et une partie de l'épichlorhydrine sont distillées du milieu.

Dans ce procédé il est essentiel de contrôler la vitesse d'introduction de la solution d'hydroxyde alcalin et la vitesse de distillation de telle sorte que le milieu réactionnel contienne de 0,3 à 2 % en poids d'eau. La réaction entre l'épichlorhydrine et le polyphénol se déroule à une température de l'ordre de 120 °C. En pratique, la totalité de l'hydroxyde alcalin (de la soude) n'est additionné qu'au bout de 3 à 5 heures. L'excès d'épichlorhydrine est alors éliminé par distillation et on introduit un solvant dans le milieu réactionnel de manière à séparer la résine du sel formé (chlorure de sodium).

Un autre type de procédé s'appuie sur le principe selon lequel l'agent alcalin joue un double rôle dans la synthèse envisagée : un rôle catalytique pour favoriser la condensation du polyphénol et de l'épichlorhydrine, et un rôle d'agent de déshydrochloration, pour transformer les groupements « chlorhydrines » en groupes oxirannes. De tels procédés se déroulent donc en deux stades. Ainsi, le brevet français 1 366 444 décrit un tel procédé en deux stades par lequel on met en contact une mole de bisphénol-A et au moins 10 moles d'épichlorhydrine à une température de l'ordre de 65 °C, dans une première étape, en ajoutant progressivement (ou par incrément) une solution aqueuse à 50 % de soude, sur une période s'étalant de 2 à 4 heures, la quantité de soude introduite dans cette étape étant inférieure à 16 % de la quantité totale requise, cette quantité totale étant de 2 moles de soude par mole de bisphénol-A engagé.

Puis on élimine l'eau par distillation sous forme de son azéotrope avec l'épichlorhydrine ; ainsi, une partie seulement de l'épichlorhydrine en excès est éliminée du milieu réactionnel.

Dans une deuxième étape, on effectue la déshydrochloration vers 99 °C, dans l'épichlorhydrine restante, en ajoutant le complément de soude comme agent de déshydrochloration, sous forme de paillettes. Au bout d'une heure environ, on distille l'excédent d'épichlorhydrine. On dissout alors la résine obtenue dans un solvant ; on lave avec de l'eau, obtenant deux phases, une phase aqueuse renfermant le chlorure de sodium formé, et une phase organique contenant la résine. On sépare la phase organique et on la traite de nouveau pendant une heure à 90 °C environ, avec de la soude en paillettes. La résine est alors récupérée par diverses opérations de lavage, neutralisation et séchage.

Ces procédés sont extrêmement lourds à mettre en œuvre : ils nécessitent des durées de réaction relativement longues, des contrôles stricts des diverses conditions de réaction et de nombreuses étapes pour purifier et/ou récupérer la résine recherchée. D'autre part, les pertes en épichlorhydrine, engagée nécessairement en excès, ne sont pas négligeables même lorsque le plus grand soin est apporté à la mise en œuvre de ce genre de procédé.

Très récemment, des auteurs ont envisagé une autre voie d'accès à ce type de résine. C'est ainsi (cf. MAKROMOL. CHEM. 179,7, 1661-1671, 1978) qu'il a été proposé de réaliser la synthèse des résines en cause, à partir des sels alcalins de certains diphénols et de halo-1 époxy-2,3 alcanes, en milieu anhydre et aprotique.

Toutefois, la réaction est limitée par la difficulté à solubiliser les sels alcalins de diphénols. En effet, de grandes quantités de diméthylsulfoxide doivent être utilisées pour rendre le milieu homogène, ce qui entrave le développement d'une telle technique à l'échelle industrielle.

Il a maintenant été trouvé que l'on peut préparer des éthers glycidiques de polyphénols à partir de

sels alcalins de polyphénols et de halo-1 époxy-2,3 alcanes en milieu anhydre et sensiblement aprotique, sans être forcément en milieu homogène, à condition d'opérer en présence de catalyseurs, définis ci-après.

Le procédé selon l'invention permet d'obtenir par une technique relativement simple et rapide, des résines époxydes présentant de très bonnes caractéristiques.

Selon l'invention, on fait réagir au moins un sel alcalin d'un polyphénol sur au moins un halo-1 époxy-2,3 alcane, en présence de quantités catalytiques de composés de formule :

$$N[CHR_1—CHR_2—O—(CHR_3—CHR_4—O)_n—R_5]_3 \qquad (I)$$

dans laquelle :

n est un nombre entier supérieur ou égal à 0 et inférieur ou égal à 10,

$R_1$, $R_2$, $R_3$, $R_4$, identiques ou différents représentent un atome d'hydrogène ou un radical alkyle ayant de 1 à 4 atomes de carbone, et

$R_5$ représente un atome d'hydrogène, un radical alkyle ou cycloalkyle ayant de 1 à 12 atomes de carbone, un radical phényle, un radical phénylalkyle ($C_6H_5—C_mH_{2m}—$) ou alkylphényle ($C_mH_{2m+1}—C_6H_4—$), m étant compris entre 1 et environ 12 ($1 \leq m \leq 12$).

De préférence, on utilise, comme catalyseurs des composés de formule (I) dans laquelle, $R_1$, $R_2$, $R_3$ et $R_4$, identiques ou différents, représentent un atome d'hydrogène ou un radical méthyle, $R_5$ et n ayant la signification donnée précédemment.

Une classe particulièrement préférée de catalyseurs est constituée par les composés de formule (I) dans laquelle, n est supérieur ou égal à 1 et inférieur ou égal à 3, $R_5$ représente un atome d'hydrogène ou un radical alkyle ayant de 1 à 4 atomes de carbone.

Les catalyseurs de formule (I) dans laquelle n est supérieur ou égal à 1 et inférieur ou égal à 3, $R_1$, $R_2$, $R_3$ et $R_4$ représentent l'hydrogène et $R_5$ représente un atome d'hydrogène ou, encore mieux, un radical alkyle ayant de 1 à 4 atomes de carbone, conviennent particulièrement bien à la mise en œuvre du procédé selon l'invention.

A titre d'exemples de composés de formule (I) utilisables dans le cadre du présent procédé on peut citer :

— la tris(oxa-3 hydroxy-5 pentyl)amine de formule :

$$N\text{-}(CH_2—CH_2—O—CH_2—CH_2—OH)_3$$

— la tris(oxa-3 heptyl)amine de formule :

$$N—(CH_2\text{-}CH_2\text{-}O\text{-}C_4H_9)_3$$

— la tris(dioxa-3,6 heptyl)amine de formule :

$$N—(CH_2\text{-}CH_2—O—CH_2—CH_2—O—CH_3)_3$$

— la tris(trioxa-3,6,9 décyl)amine de formule :

$$N—(CH_2—CH_2—O—CH_2—CH_2—O—CH_2—CH_2—O—CH_3)_3$$

— la tris(dioxa-3,6 octyl)amine de formule :

$$N—(CH_2—CH_2—O—CH_2—CH_2—O—C_2H_5)_3$$

— la tris(trioxa-3,6,9 undécyl)amine de formule :

$$N—(CH_2—CH_2—O—CH_2—CH_2—O—CH_2—CH_2—O—C_2H_5)_3$$

— la tris(dioxa-3,6 nonyl)amine de formule :

$$N—(CH_2—CH_2—O—CH_2—CH_2—O—C_3H_7)_3$$

— la tris(trioxa-3,6,9 docécyl)amine de formule :

$$N—(CH_2—CH_2—O—CH_2—CH_2—O—CH_2—CH_2—O—C_3H_7)_3$$

— la tris(dioxa-3,6 décyl)amine de formule :

$$N-(CH_2-CH_2-O-CH_2-CH_2-O-C_4H_9)_3$$

— la tris(trioxa-3,6,9 tridécyl)amine de formule :

$$N-(CH_2-CH_2-O-CH_2-CH_2-O-CH_2-CH_2-O-C_4H_9)_3$$

— la tris(dioxa-3,6 méthyl-4 heptyl)amine de formule :

$$N-(CH_2-CH_2-O-\underset{\displaystyle CH_3}{\underset{|}{CH}}-CH_2-O-CH_3)_3$$

— et la tris(dioxa-3,6 diméthyl-2,4 heptyl)amine de formule :

$$N-(CH_2-CH-O-\underset{\displaystyle CH_3}{\underset{|}{CH}}-CH_2-O-CH_3)_3.$$

Les composés de formule (I) ci-avant peuvent être préparés par condensation d'un sel alcalin de formule :

$$R_5(O-CHR_4-CHR_3)_n-OM \qquad \text{(II)}$$

dans laquelle : $R_3$, $R_4$, $R_5$ et n ont la signification précisée ci-avant et M représente un atome de métal alcalin choisi parmi le sodium, le potassium et le lithium,

soit sur une amine de formule générale :

$$N(CHR_1-CHR_2-X)_3 \qquad \text{(III)}$$

dans laquelle $R_1$ et $R_2$ ont la signification précisée ci-avant, et X représente le chlore ou le brome,

soit sur le chlorhydrate ou le bromhydrate correspondant, le rapport molaire du sel de métal alcalin à l'amine étant compris entre environ 3 et environ 5.

L'opération de condensation est réalisée à une température comprise entre 100 et 150 °C pendant 1 à 15 heures, en présence d'un solvant qui peut être, par exemple, le chlorobenzène, ou de préférence le composé hydroxylé correspondant au sel alcalin de départ, c'est-à-dire le composé obtenu par remplacement dans la formule (II) ci-avant, de l'atome de métal alcalin (M) par un atome d'hydrogène.

On opère de préférence de telle sorte qu'on ait une solution renfermant de 2 à 5 moles de sel alcalin par litre de solvant.

Le mélange obtenu en fin de réaction contient principalement l'amine tertiaire de formule (I) ; il contient aussi en faible proportion l'amine secondaire correspondante et des traces d'amine primaire.

Dans le procédé selon l'invention, on peut utiliser directement le mélange ci-dessus obtenu après première distillation, c'est-à-dire renfermant les trois types d'amine.

On préfère, pour une meilleure mise en œuvre de l'invention, effectuer une distillation plus poussée du mélange ci-dessus afin d'obtenir une amine tertiaire sensiblement pure.

Le procédé selon l'invention nécessite la mise en œuvre d'au moins un sel alcalin de polyphénol.

Par sels alcalins de polyphénols, on entend des composés de formule :

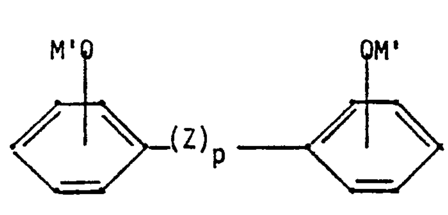

(IV)

dans laquelle p est égal à 0 ou 1, M' représente un atome de métal alcalin choisi parmi le lithium, le sodium, le potassium et le césium, M' étant de préférence un atome de sodium ou de potassium, et Z représente un radical divalent choisi dans le groupe comprenant les radicaux

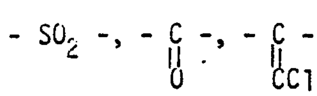

et les radicaux de formule (V) ci-après :

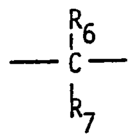 (V)

dans laquelle $R_6$ est un atome d'hydrogène ou un radical $—CH_3$, $R_7$ représente un radical monovalent choisi dans le groupe comprenant :

H, $—CH_3$, $—CH_2—CH_3$, $—C(CH_3)_3$, $—CCl_3$,

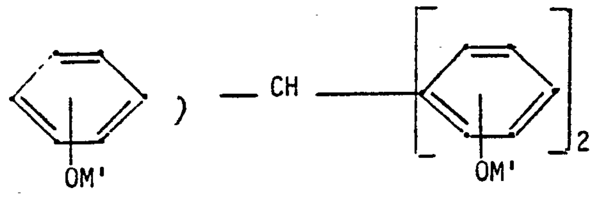

et

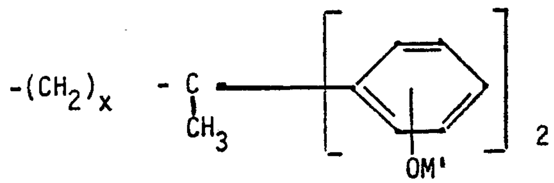

x étant égal à 0, 1 ou 2, et M' ayant la même signification que précédemment.

A titre d'exemple de polyphénols utilisables sous la forme de leurs sels alcalins, dans le cadre de la présente invention, on peut citer :

— le dihydroxy-4,4' diphényle
— la dihydroxy-4,4' diphénylsulfone
— l'(hydroxy-2' phényl)-2 (hydroxy-4" phényl)-2 propane
— le dihydroxy-4,4' diphénylméthane (Bisphénol-F)
— le bis(hydroxy-4 phényl)-1,1 éthane
— le bis(hydroxy-4 phényl)-1,1 méthyl-2 propane
— le bis(hydroxy-4 phényl)-2,2 propane (Bisphénol-A)
— le bis(hydroxy-4 phényl)-2,2 butane
— le bis(hydroxy-2 phényl)-2,2 propane
— le bis(hydroxy-4 phényl)-2,2 trichloro-1,1,1 éthane
— le bis(hydroxy-4 phényl)-2,2 dichloro-1,1 éthylène
— le tris(hydroxy-4 phényl) méthane
— le tétrakis(hydroxy-4' phényl)-1,1,2,2 éthane
— le tétrakis(hydroxy-4' phényl)-2,2,3,3 butane
— le tétrakis(hydroxy-4' phényl)-2,2,4,4 pentane
— le tétrakis(hydroxy-4' phényl)-2,2,5,5 hexane.

Le procédé selon l'invention, envisage également l'utilisation de sels alcalins de phénols polycycliques dans lesquels les atomes d'hydrogène du noyau ont été remplacés en partie par des atomes d'halogènes ou des radicaux alkyles. C'est le cas, par exemple, du bis(dibromo-3,5, hydroxy-4 phényl)-2,2 propane, du bis(dichloro-3,5, hydroxy-4 phényl)-2,2 propane, du bis(hydroxy-4, méthyl-2 phényl)-2,2 propane, du bis(hydroxy-2, tertiobutyl-4 phényl)-2,2 propane et du bis(chloro-2, hydroxy-4 phényl)-2,2 propane.

Le procédé selon l'invention envisage également l'utilisation de sels alcalins de phénols polycycliques plus complexes, tels que les résines novolaques. Ces résines sont obtenues par condensation, en présence de catalyseurs acides, du phénol ou du crésol sur des aldéhydes tels que le formaldéhyde, l'acétaldéhyde, le crotonaldéhyde, etc...

Selon la présente invention on peut utiliser des mélanges de deux ou plusieurs sels alcalins de polyphénols, c'est-à-dire un mélange de deux ou plusieurs composés différant par la nature du cation alcalin et/ou dérivant de deux ou plusieurs polyphénols distincts.

Selon un mode de réalisation préféré de la présente invention, on utilise un sel alcalin de diphénol ou

un mélange de deux ou plusieurs sels alcalins de diphénols pouvant différer par la nature du cation alcalin et/ou dérivant de deux ou plusieurs diphénols distincts. On utilise, de préférence, des sels de sodium ou de potassium de un ou plusieurs diphénols, en particulier les sels de diphénols choisis dans le groupe constitué par : le bisphénol-A, le bisphénol-F, le bis(hydroxy-4 phényl)-2,2 dichloro-1,1 éthylène et le bis(dibromo-3,5, hydroxy-4 phényl)-2,2 propane.

Selon une variante préférée de l'invention, on utilise les sels alcalins du bisphénol-A et/ou du bisphénol-F, et plus particulièrement, les sels de sodium ou de potassium.

Les sels de sodium du bisphénol-A et/ou du bisphénol-F conviennent particulièrement bien à la mise en œuvre de la présente invention. On préfère tout particulièrement le sel de sodium du bisphénol-A.

La quantité de catalyseur (composés de formule I) à mettre en œuvre n'est pas critique.

On observe de bons résultats lorsqu'on engage au moins 0,05 équivalent de composé de formule (I) pour 100 équivalents de groupement OM' en provenance des sels alcalins de polyphénols. Il n'y a pas d'avantage particulier à en utiliser plus de 5 équivalents pour 100 équivalents de groupements (OM').

De préférence, on utilise de 0,25 à 2,5 équivalents de composés de formule (I) pour 100 équivalents de groupements OM'.

Selon une variante préférée de la présente invention, lorsqu'on met en œuvre des sels potassiques de polyphénols, on utilise conjointement des composés de formule (I) dans laquelle $R_1$, $R_2$, $R_3$ et $R_4$ représentent un atome d'hydrogène, $R_5$ représente un atome d'hydrogène ou, de préférence un radical alkyle ayant de 1 à 4 atomes de carbone et n est supérieur ou égal à 2, par exemple la tris(trioxa-3,6,9 décyl)amine.

Selon une variante encore plus avantageuse, on met en œuvre des sels sodiques de polyphénols et des composés de formule (I), dans laquelle $R_1$, $R_2$, $R_3$ et $R_4$ représentent un atome d'hydrogène, $R_5$ représente un atome d'hydrogène, ou de préférence un radical alkyle ayant de 1 à 4 atomes de carbone et n est supérieur ou égal à 1, par exemple la tris(oxa-3, hydroxy-5 pentyl)amine, la tris(dioxa-3,6 heptyl)amine, la tris(dioxa-3,6 octyl)amine et la tris(trioxa-3,6,9 décyl)amine.

De nombreux halo-1 époxy-2,3 alcanes conviennent à la mise en œuvre de la présente invention. On peut citer à titre d'exemple, le chloro-1 époxy-2,3 propane (plus couramment appelé épichlorhydrine), le bromo-1 époxy-2,3 propane, le chloro-1 époxy-2,3 butane, le chloro-1 méthyl-1 époxy-2,3 propane, ainsi que leurs mélanges.

Selon une variante préférée de la présente invention, on utilise l'épichlorhydrine.

Par milieu sensiblement aprotique on entend un milieu ne renfermant pratiquement pas de protons, à l'exception de ceux susceptibles de provenir de certains catalyseurs.

Le milieu réactionnel devant être anhydre il conviendra de sécher les réactifs, le cas échéant.

Selon un premier mode de réalisation de la présente invention, on fait réagir au moins une mole de halo-1 époxy-2,3 alcane par équivalent-gramme de groupement OM' en provenance d'au moins un sel alcalin de polyphénol chargé initialement, en milieu sensiblement aprotique.

On n'observe pas d'avantage particulier lorsqu'on opère avec plus de 13 moles de halo-1 époxy-2,3 alcane par équivalent-gramme de groupements OM'. On opère de préférence avec 1 à 5 moles de halo-1 époxy-2,3 alcane par équivalent-gramme de groupements OM'.

Les sels alcalins de polyphénols étant insolubles dans les halo-1 époxy-2,3 alcanes, il est souhaitable d'opérer avec une agitation suffisante.

Selon un deuxième mode de réalisation de la présente invention, on peut introduire le (ou les) sel(s) alcalin(s) progressivement, par exemple en un nombre variable de fractions égales ou différentes, plus ou moins espacées dans le temps, ou en continu.

La température de réaction n'est pas critique et elle est généralement comprise entre 50 et 150 °C. Au-dessous de 50 °C la réaction est relativement lente, et au-dessus de 150 °C on risque de dégrader plus ou moins la résine obtenue.

On opère de préférence à une température comprise entre 80 et 120 °C, environ.

Il a été trouvé que l'addition au milieu réactionnel d'au moins un composé organique aprotique et de préférence polaire, apporte un effet favorable, même lorsque des quantités de l'ordre de quelques pour cent en poids sont présentes dans le milieu réactionnel. A titre d'exemple de composés organiques utilisables dans le cadre du présent procédé, on peut citer la N-méthylpyrrolidone, le diméthylformamide, le diméthylacétamide, le diméthylsulfoxyde, le dipropylsulfoxyde, la tétraméthylènesulfone, l'acétonitrile, le propionitrile, le benzonitrile, le sulfure d'éthylène. Exceptionnellement, certains de ces composés rendront le milieu homogène, mais ceci n'est en aucun cas nécessaire.

Lorsqu'on opère en présence d'un tel composé organique, on obtient de bons résultats même lorsque la quantité de halo-1 époxy-2,3 alcane est inférieure ou égale à 3 moles par équivalent-gramme de groupements OM', ce qui constitue un mode de réalisation du présent procédé, particulièrement avantageux.

En général, une quantité de composé organique anhydre, aprotique et polaire de l'ordre de 10 % en poids est ajoutée au milieu réactionnel, cette quantité représente de préférence, au moins 30 % (en poids) du milieu réactionnel. On peut en utiliser des quantités plus importantes, mais au-delà de 80 % (en poids) on n'observe pas d'avantage particulier.

Selon une variante avantageuse de l'invention, on opère avec 10 à 80 % en poids d'acétonitrile, et de préférence avec au moins 30 % en poids d'acétonitrile.

On peut opérer également sous pression autogène ou sous une pression d'azote pouvant atteindre 20 bars.

Le procédé selon l'invention convient, notamment, à la préparation des résines époxydes liquides, à partir d'épichlorhydrine et de sels alcalins du bisphénol-A et/ou du bisphénol-F, et plus particulièrement à partir du sel disodique du bisphénol-A en présence, notamment, de tris(dioxa-3,6 heptyl)amine. Ce type de résine a généralement une viscosité mesurée à 25 °C inférieure ou égale à 10 Pa.s, et un taux d'époxyde pour 100 g de l'ordre de 0,5.

Les exemples ci-après illustrent l'invention.

## Exemples

Préparation du sel disodique du bisphénol-A :

Dans une solution de 40 g de soude et 200 ml de méthanol, on coule une solution de 114 g de bisphénol-A et 144 ml de méthanol. On chauffe le mélange à reflux pendant 30 minutes, puis on distille 70 % de méthanol.

A la pâte restante, on ajoute 234 ml de toluène. On distille alors l'azéotrope méthanol-toluène, puis l'azéotrope eau-toluène. L'opération est arrêtée lorsque le toluène distille seul. On filtre alors le sel disodique du bisphénol-A (appelé dans les exemples ci-après bisphénate de sodium) et on le sèche en étuve sous 26,67 mbars (20 mmHg) et à 90 °C durant 16 heures. Le produit ainsi obtenu est alors engagé à la préparation des résines comme décrit ci-après.

Selon un mode opératoire analogue, on prépare le sel dipotassique du bisphénol-A (bisphénate de potassium).

Préparation des catalyseurs :

a) Préparation de la tris(dioxa-3,6 heptyl)amine :

Dans un ballon tricol d'un litre, muni d'un agitateur mécanique, d'un thermomètre, d'un réfrigérant, on introduit 380 g de méthoxy-2 éthanol (5 mol). On ajoute 23 g de sodium (1 mol) en 3 heures en maintenant la température de mélange à 40 °C.

Au mélange précédent, on ajoute 51,6 g de chlorhydrate de tris(chloro-2 éthyl)amine (soit 0,215 mol). On chauffe alors le mélange à reflux du méthoxy-2 éthanol (125 °C) pendant 12 heures, puis on distille le solvant sous pression réduite. Le méthoxy-2 éthanolate de sodium en excès est neutralisé par addition de 11,6 ml d'HCl aqueux (10 N). Le chlorure de sodium est filtré et la solution est distillée.

La tris(dioxa-3,6 heptyl)amine distille entre 165 et 180 °C sous 0,67 mbar (0,5 mm Hg). On obtient 49 g de produit.

La tris(dioxa-3,6 octyl)amine est préparée de manière analogue.

b) Préparation de la tris(trioxa-3,6,9 décyl)amine :

Dans un ballon tricol de 1 litre équipé d'un agitateur mécanique, d'un condenseur et d'un thermomètre, on introduit 600 g d'éther monométhylique du diéthylèneglycol (dioxa-3,6 heptanol-1), soit 5 mol puis 23 g de sodium (1 mol) par petites fractions afin de former le dioxa-3,6 heptanolate de sodium.

Lorsque le sodium est totalement transformé, on ajoute alors 51,8 g de chlorhydrate de la tris(chloro-2 éthyl)amine (soit 0,215 mol). Le mélange est chauffé à 130 °C pendant 8 heures sous agitation puis refroidi et l'excès d'alcoolate de sodium neutralisé par une solution aqueuse d'acide chlorhydrique à 10 %. Le dioxa-3,6 heptanol-1 est éliminé par distillation à 130 °C sous 26,67 mbars (20 mm Hg). Le mélange obtenu est filtré afin d'éliminer le chlorure de sodium puis le produit est distillé. On obtient ainsi 83 g de tris(trioxa-3,6,9 décyl)amine qui distille à 189 °C sous 0,13 mbar (0,1 mm Hg).

c) Préparation de la tris(oxa-3 hydroxy-5 pentyl)amine :

Dans un ballon de 3 litres, muni d'un agitateur mécanique, d'un thermomètre, d'une tête de distillation suivie d'un réfrigérant et d'un ballon récepteur, on introduit 2 200 g (soit 35,5 mol ou 2 litres) de glycol et 218,5 g (5,35 mol) de soude en pastilles (à 98 %).

On chauffe à 85 °C, la soude se dissout totalement ; on chauffe ensuite à 125 °C sous 26,67 mbar (20 mm Hg) pour éliminer la majorité de l'eau formée (80 ml) puis on récupère 180 ml de glycol distillant entre 125 et 135 °C. On obtient 2 262 g (soit environ 2 litres) de solution glycolique contenant 2,7 mol/l de monoglycolate de sodium ; celle-ci est ensuite refroidie jusqu'à 80 °C.

Aux 2 262 g de solution glycolique de monoglycolate de sodium ci-dessus préparés, (soit 5,35 mol de monoglycolate de sodium) on ajoute 280,4 g (soit 1,16 mol) de chlorhydrate de tris(chloro-2 éthyl)amine et on chauffe au reflux (197 °C) pendant 3 heures. On observe la précipitation du chlorure de sodium formé.

Une grande partie de glycol (1 450 ml) est ensuite distillée sous vide à 100 °C sous 4 mbars (3 mm Hg)

pendant 4 heures 30 minutes.

Le contenu du ballon est alors filtré, le gâteau est lavé par 6 fois 100 ml d'acétone, puis séché.

On obtient 270 g de NaCl (au lieu de 272 g selon la théorie).

Le monoglycolate de sodium en excès est neutralisé avec 0,7 mol (soit 56,5 ml) d'acide chlorhydrique (d = 1,19). L'acétone est évaporée et le résidu huileux obtenu est distillé. On recueille le cœur de distillation entre 210-220 °C sous 2,67 mbars (2 mm Hg).

On récupère 213 g d'un liquide jaune clair, qui, après analyses, s'avère être la tris(oxa-3 hydroxy-5 pentyl)amine.

Exemple 1

Dans un réacteur en verre équipé d'un agitateur central à ancre, d'un réfrigérant à boules et d'un thermomètre, on charge :

— 92,9 mg (1 mol) d'épichlorhydrine,
— 1,6 g (5 mmol) de tris(dioxa-3,6 heptyl)amine.

On chauffe à 60 °C et on ajoute 29,6 g (0,1 mol) de bisphénate de sodium anhydre. On chauffe le mélange à 116 °C pendant 45 minutes. La suspension ainsi obtenue est alors filtrée. Le filtrat est lavé 2 fois par 80 ml d'eau. Après décantation, la phase organique est évaporée à 100 °C sous 26,67 mbars (20 mm Hg).

On obtient ainsi 32,3 g de résine liquide dont les caractéristiques sont les suivantes :

| | |
|---|---|
| — viscosité mesurée à 25 °C : | 11 Pa.s (110 poises) |
| — taux d'époxyde pour 100 g : | 0,520 |
| — taux de chlore : | 0,5 % |

La phase aqueuse, obtenue après décantation est traitée par le chlorure de méthylène. On extrait ainsi 1 g d'un produit qui, après analyse, se révèle être de la tris(dioxa-3,6 heptyl)amine.

Exemple 2

On reproduit le mode opératoire de l'exemple 1, mais en ne chargeant que 46,5 g (0,5 mol) d'épichlorhydrine. En 30 minutes de réaction, on obtient 33 g de résine liquide dont la viscosité mesurée à 25 °C est de 9 Pa.s (90 poises).

Exemple 3

Dans l'appareillage décrit ci-avant on charge :

— 92,5 g (1 mol) d'épichlorhydrine
— 0,32 g (1 mmol) de tris(dioxa-3,6 heptyl)amine.

On chauffe à 60 °C et on ajoute alors 4,9 g de bisphénate de sodium anhydre (1re fraction). On porte alors le mélange à 117 °C (reflux de l'épichlorhydrine) et on ajoute toutes les 5 minutes une fraction de 4,9 g de bisphénate de sodium anhydre. Au total, on introduit 29,4 g (0,1 mol) de bisphénate de sodium anhydre en 6 fractions. La durée totale de réaction est de 1 heure. Le milieu réactionnel est une suspension, que l'on filtre en fin de réaction. Le filtrat est traité comme précédemment. On obtient 26 g d'une résine liquide dont les caractéristiques sont les suivantes :

| | |
|---|---|
| — viscosité mesurée à 25 °C : | 7,4 Pa.s (74 poises) |
| — taux d'époxyde pour 100 g : | 0,528 |
| — taux de chlore : | 1,04 %. |

Exemple 4

On reproduit l'exemple 3 mais en n'engageant que 46,25 g (0,5 mol) d'épichlorhydrine. On obtient 24 g de résine liquide dont les caractéristiques sont les suivantes :

| | |
|---|---|
| — viscosité mesurée à 25 °C : | 3,5 Pa.s (35 poises) |
| — taux d'époxyde pour 100 g : | 0,529 |
| — taux de chlore : | 0,98 %. |

Exemple 5

On reproduit l'exemple 3 mais en n'engageant que 18,5 g (0,2 mol) d'épichlorhydrine. On obtient 15 g

de résine liquide dont les caractéristiques sont les suivantes :

— viscosité mesurée à 25 °C : 58 Pa.s (580 poises)
— taux d'époxyde pour 100 g : 0,460
— taux de chlore : 0,59 %.

Exemple 6

On opère comme décrit dans l'exemple 3 en utilisant :

— 46,25 g (0,5 mol) d'épichlorhydrine
— 0,45 g (1 mmol) de tris(trioxa-3,6,9 décyl)amine et au total 37,2 g (0,124 mol) de bisphénate de potassium anhydre, que l'on introduit en 6 fractions égales espacées chacune de 10 minutes. La réaction dure 1 heure à 117 °C. On obtient 39 g d'une résine liquide dont les caractéristiques sont les suivantes :

— viscosité mesurée à 25 °C : 22,5 Pa.s (225 poises)
— taux d'époxyde pour 100 g : 0,493
— taux de chlore : 0,90 %.

Exemple 7

On reproduit l'exemple 4, mais en utilisant 0,36 g (1 mmol) de tris(dioxa-3,6 octyl)amine. On obtient 28 g d'une résine liquide dont les caractéristiques sont les suivantes :

— viscosité mesurée à 25 °C : 30,7 Pa.s (307 poises)
— taux d'époxyde pour 100 g : 0,480
— taux de chlore : 0,61 %.

Exemple 8

Dans l'appareillage décrit à l'exemple 1, on introduit :

— 92 g (1 mol) d'épichlorhydrine
— 78 ml d'acétonitrile
— 3 g (10 mmol) de tris(dioxa-3,6 heptyl)amine.

On porte la masse à 60 °C et on ajoute 54,5 g (0,2 mol) de bisphénate de sodium anhydre. On obtient une suspension que l'on porte à 83 °C (reflux de l'acétonitrile) pendant 1 heure. On filtre la suspension et on évapore le filtrat sous 26,67 mbars (20 mm Hg) et en chauffant jusqu'à 140 °C.

On récupère 57 g d'une résine liquide dont les caractéristiques sont les suivantes :

— viscosité mesurée à 25 °C :
— taux d'époxyde pour 100 g : 0,505
— taux de chlore : 0,50 %.

Exemple 9

On reproduit l'exemple 8 en utilisant :

— 18,5 g (0,2 mol) d'épichlorhydrine
— 100 ml d'acétonitrile
— 1,5 g (5 mmol) de tris(dioxa-3,6 heptyl)amine
— 27,2 g (0,1 mol) de bisphénate de sodium anhydre.

Après 1 heure de réaction à 83 °C, on filtre la suspension : le filtrat est évaporé sous 26,67 mbars (20 mm Hg) à 80 °C puis à 160 °C, pendant 5 minutes.

On obtient 10,3 g d'une résine liquide transparente et colorée en brun, dont les caractéristiques sont les suivantes :

— viscosité mesurée à 25 °C : 8 Pa.s (80 poises)
— taux d'époxyde pour 100 g : 0,553
— taux de chlore : 0,46 %.

On dissout alors cette résine dans 30 ml de méthylisobutylcétone, et on lave avec 30 ml d'eau. La phase aqueuse est décantée ; on extrait de celle-ci par le chlorure de méthylène, 1 g d'un produit qui,

après analyse, se révèle être de la tris(dioxa-3,6 heptyl)amine.

La phase organique est évaporée à 120 °C sous 26,67 mbars (20 mm Hg) et la résine récupérée a une coloration jaune, légère.

Exemple 10

Dans l'appareillage décrit à l'exemple 1, on introduit :

— 23,2 g (0,25 mol) d'épichlorhydrine
— 19,5 ml d'acétonitrile
— 0,7 g (2,5 mmol) de tris(oxa-3, hydroxy-5 pentyl)amine.

On porte le mélange à 60 °C et on introduit en 6 fractions égales, espacées de 15 minutes un total de 14,65 g (0,05 mol) de bisphénate de sodium anhydre. La réaction dure 90 minutes à 83 °C.

En traitant la suspension comme décrit précédemment, on obtient 17 g d'une résine dont les caractéristiques sont les suivantes :

— viscos mesurée à 25 °C : ≈ 100 Pa.s (1 000 poises)
— taux c .xyde pour 100 g : 0,472
— taux de chlore : 0,41 %.

Exemple 11

On reproduit l'exemple 9, mais en utilisant :

— 9,25 g (0,1 mol) d'épichlorhydrine
— 50 ml d'acétonitrile
— 0,226 g (0,5 mmol) de tris(trioxa-3,6,9 décyl)amine
— 18,95 g (0,05 mol) de bisphénate de potassium anhydre.

Le bisphénate de potassium est introduit en 6 fractions égales espacées de 15 minutes. En 90 minutes de réaction à 83 °C, on obtient 8 g d'une résine dont les caractéristiques sont les suivantes :

— viscosité mesurée à 25 °C : 20 Pa.s (200 poises)
— taux d'époxyde pour 100 g : 0,492
— taux de chlore : 0,35 %.

Exemple 12

On reproduit l'exemple 9, mais en introduisant le bisphénate de sodium anhydre sous forme de 6 fractions égales espacées de 15 minutes. Après 90 minutes de réaction à 83 °C, on obtient 4,5 g d'une résine liquide dont les caractéristiques sont les suivantes :

— viscosité mesurée à 25 °C : 11 Pa.s (110 poises)
— taux d'époxyde pour 100 g : 0,525
— taux de chlore : 0,8 %.

Exemple 13

Dans un autoclave en acier inoxydable de 1 litre, équipé d'un agitateur ancre, d'un thermomètre et d'un manomètre, on charge :

— 370 g (4 mol) d'épichlorhydrine
— 2,7 g (7,4 mmol) de tris(dioxa-3,6 octyl)amine
— 230 ml d'acétonitrile.

On chauffe le mélange à 60 °C et on ajoute 218 g (0,8 mol) de bisphénate de sodium anhydre. On purge à l'azote et chauffe sous pression normale jusqu'à 80 °C, puis sous pression autogène jusqu'à 100 °C. Après 1 heure de réaction à 100 °C, on refroidit (en 1 heure) jusqu'à 65 °C.

La suspension est filtrée et lavée par 400 ml d'acétonitrile.

On évapore le filtrat sous 26,67 mbars (20 mm Hg) et en chauffant jusqu'à 140 °C.

On récupère 237,5 g d'une résine liquide dont les caractéristiques sont les suivantes :

— viscosité mesurée à 25 °C : 18 Pa.s (180 poises)
— taux d'époxyde pour 100 g : 0,494
— taux de chlore : 0,49 %.

Exemple 14

Dans l'appareil décrit à l'exemple 13, on introduit :

— 370 g (4 mol) d'épichlorhydrine
— 2,7 g (7,4 mmol) de tris(dioxa-3,6 octyl)amine
— 319 ml d'acétonitrile.

On chauffe le mélange à 60 °C et on ajoute 218 g (0,8 mol) de bisphénate de sodium anhydre. On purge à l'azote et laisse une pression de 3 bars. On chauffe jusqu'à 120 °C, la pression monte à 4,3 bars. Après 30 minutes de réaction à 120 °C on refroidit à 74 °C, en 1 heure. La suspension est filtrée et lavée par 400 ml d'acétonitrile.

Le filtrat est chauffé jusqu'à 140 °C sous 26,67 mbars (20 mm Hg). On récupère 221 g de résine liquide dont les caractéristiques sont les suivantes :

| | |
|---|---|
| — viscosité mesurée à 25 °C : | 13,6 Pa.s (136 poises) |
| — taux d'époxyde pour 100 g : | 0,515 |
| — taux de chlore : | 0,38 %. |

Exemple 15

Dans l'appareillage décrit à l'exemple 13, on introduit :

— 370 g (4 mol) d'épichlorhydrine
— 2,7 g (7,4 mmol) de tris(dioxa-3,6 octyl)amine
— 377 ml d'acétonitrile.

On chauffe le mélange à 60 °C et on ajoute 218 g (0,8 mol) de bisphénate de sodium anhydre. On purge à l'azote et laisse une pression de 3 bars. On chauffe jusqu'à 100 °C, la pression monte à 3,4 bars. Après 1 heure de réaction à 100 °C on refroidit à 65 °C, en 10 minutes. La suspension est filtrée et lavée par 400 ml d'acétonitrile.

Le filtrat est chauffé jusqu'à 140 °C sous 26,67 mbars (20 mm Hg). On récupère 167,4 g de résine liquide dont les caractéristiques sont les suivantes :

| | |
|---|---|
| — viscosité mesurée à 25 °C : | 10,1 Pa.s (101 poises) |
| — taux d'époxyde pour 100 g : | 0,523 |
| — taux de chlore : | 0,34 %. |

Exemple 16

Dans l'appareillage décrit à l'exemple 1, on introduit :

— 185 g (2 mol) d'épichlorhydrine
— 7,3 g (20 mmol) de tris(dioxa-3,6 octyl)amine
— 148 ml de toluène.

On chauffe à 60 °C et on ajoute 109 g (0,4 mol) de bisphénate de sodium anhydre. On obtient une suspension que l'on porte à reflux (88 °C) pendant 1 heure. On filtre la suspension et on évapore le filtrat sous 26,67 mbars (20 mm Hg) et en chauffant jusqu'à 140 °C.

On obtient ainsi 64,6 g de résine liquide dont les caractéristiques sont les suivantes :

| | |
|---|---|
| — viscosité mesurée à 25 °C : | 6,4 Pa.s (64 poises) |
| — taux d'époxyde pour 100 g : | 0,473 |
| — taux de chlore : | 0,5 %. |

Exemple 17

Dans l'appareillage décrit à l'exemple 1, on introduit :

— 92,5 g (1 mol) d'épichlorhydrine
— 3,65 g (10 mmol) de tris(dioxa-3,6 octyl)mine
— 79,5 ml d'acétonitrile.

On chauffe à 60 °C et on ajoute 48,85 g (0,2 mol) du sel disodique du bisphénol-F (sel préparé selon

un mode opératoire analogue à celui décrit pour le sel disodique du bisphénol-A).

On obtient une suspension que l'on porte à 84 °C (reflux de l'acétonitrile) pendant 1 heure.

On filtre la suspension et on évapore le filtrat sous 26,67 mbars (20 mm Hg) et en chauffant jusqu'à 140 °C.

On obtient ainsi 43,8 g de résine liquide dont les caractéristiques sont les suivantes :

| | |
|---|---|
| — viscosité mesurée à 25 °C : | 4,1 Pa.s (41 poises) |
| — taux d'époxyde pour 100 g : | 0,517 |
| — taux de chlore : | 0,40 %. |

**Revendications**

1. Procédé de préparation de polyéthers glycidiques de polyphénols par réaction, en milieu anhydre et sensiblement aprotique, d'au moins un sel alcalin de polyphénol sur au moins un halo-1 époxy-2,3 alcane en présence d'au moins un composé de formule (I) :

$$N[CHR_1—CHR_2—O—(CHR_3—CHR_4—O)_n—R_5]_3$$

dans laquelle

n est un nombre entier supérieur ou égal à 0, et inférieur ou égal à 10,

$R_1$, $R_2$, $R_3$, $R_4$ identiques ou différents, représentent un atome d'hydrogène ou un radical alkyle ayant de 1 à 4 atomes de carbone, et

$R_5$ représente un atome d'hydrogène, un radical alkyle ou cycloalkyle ayant de 1 à 12 atomes de carbone, un radical phényle, un radical phénylalkyle ($C_6H_5—C_mH_{2m}—$) ou alkylphényle ($C_mH_{2m+1}—C_6H_4—$), dans lesquels m est supérieur ou égal à 1 et inférieur ou égal à 12.

2. Procédé selon la revendication 1, caractérisé en ce qu'on opère en présence d'au moins un composé de formule (I) dans laquelle $R_1$, $R_2$, $R_3$ et $R_4$, identiques ou différents, représentent un atome d'hydrogène ou un radical méthyle.

3. Procédé selon la revendication 1 ou 2, caractérisé en ce qu'on opère en présence d'au moins un composé de formule (I) dans laquelle n est supérieur ou égal à 1, et inférieur ou égal à 3, et $R_5$ représente un atome d'hydrogène ou un radical alkyle ayant de 1 à 4 atomes de carbone.

4. Procédé selon la revendication 1, caractérisé en ce qu'on opère en présence d'au moins un composé de formule (I) dans laquelle n est supérieur ou égal à 1, et inférieur ou égal à 3, $R_1$, $R_2$, $R_3$ et $R_4$ représentent un atome d'hydrogène et $R_5$ représente un atome d'hydrogène ou un radical alkyle ayant de 1 à 4 atomes de carbone.

5. Procédé selon l'une quelconque des revendications précédentes, caractérisé en ce que le cation du sel alcalin de polyphénol est choisi dans le groupe constitué par les cations de lithium, du sodium, du potassium, du césium et leurs mélanges.

6. Procédé selon la revendication 1, caractérisé en ce qu'on utilise un sel potassique d'au moins un polyphénol et au moins un composé de formule (I) dans laquelle $R_1$, $R_2$, $R_3$, et $R_4$ représentent un atome d'hydrogène, $R_5$ représente un atome d'hydrogène ou un radical alkyle ayant de 1 à 4 atomes de carbone et n est un entier supérieur ou égal à 2 et inférieur ou égal à 10.

7. Procédé selon la revendication 6, caractérisé en ce qu'on opère en présence de tris(trioxa-3,6,9 décyl)amine.

8. Procédé selon la revendication 1, caractérisé en ce qu'on utilise un sel sodique d'au moins un polyphénol et au moins un composé de formule (I) dans laquelle $R_1$, $R_2$, $R_3$ et $R_4$ représentent un atome d'hydrogène, $R_5$ représente un atome d'hydrogène ou un radical alkyle ayant de 1 à 4 atomes de carbone et n est supérieur ou égal à 1 et inférieur ou égal à 10.

9. Procédé selon la revendication 8, caractérisé en ce qu'on opère en présence d'un composé choisi parmi la tris(oxa-3 hydroxy-5 pentyl)amine, la tris(dioxa-3,6 heptyl)amine, la tris(dioxa-3,6 octyl)amine et la tris(trioxa-3,6,9 décyl)amine.

10. Procédé selon l'une quelconque des revendications précédentes, caractérisé en ce que le polyphénol est un diphénol.

11. Procédé selon la revendication 10, caractérisé en ce que le diphénol est choisi dans le groupe constitué par le bisphénol-A, le bisphénol-F, le bis(hydroxy-4 phényl)-2,2 dichloro-1,1 éthylène et le bis(dibromo-3,5 hydroxy-4 phényl)-2,2 propane.

12. Procédé selon la revendication 11, caractérisé en ce que le polyphénol est choisi dans le groupe constitué par le bisphénol-A, le bisphénol-F et leurs mélanges.

13. Procédé selon la revendication 12, caractérisé en ce que le polyphénol est le bisphénol-A.

14. Procédé selon l'une quelconque des revendications précédentes, caractérisé en ce que le halo-1 époxy-2,3 alcane est l'épichlorhydrine.

15. Procédé selon l'une quelconque des revendications précédentes, caractérisé en ce que l'on opère en présence de 1 à 13 moles de halo-1 époxy-2,3 alcane par équivalent-gramme de groupements

OM' en provenance du sel du métal alcalin M' du polyphénol.

16. Procédé selon l'une quelconque des revendications précédentes, caractérisé en ce qu'on utilise de 0,05 à 5 équivalents de composés de formule (I) pour 100 équivalents de groupements OM' dérivant d'un sel alcalin de polyphénol.

17. Procédé selon l'une quelconque des revendications précédentes, caractérisé en ce qu'on opère en présence d'un composé organique aprotique polaire choisi dans le groupe comprenant l'acétonitrile, le diméthylformamide, le diméthylacétamide, le diméthylsulfoxyde, le dipropylsulfoxyde, le propionitrile, le benzonitrile, le sulfure d'éthylène, la N-méthylpyrrolidone et la tétraméthylènesulfone.

18. Procédé selon la revendication 17, caractérisé en ce que l'on opère en présence d'acétonitrile.

19. Procédé selon la revendication 17 ou 18, caractérisé en ce que l'on opère en présence de 1 à 3 moles de halo-1 époxy-2,3 alcane par équivalent-gramme de groupements OM' en provenance du sel alcalin de polyphénol.

20. Procédé selon l'une quelconque des revendications précédentes, caractérisé en ce que la température de réaction est comprise entre 50 et 150 °C.

**Claims**

1. Process for the preparation of glycidyl polyethers of polyphenols by reacting at least one alkali metal salt of a polyphenol with at least one 1-halogeno-2,3-epoxy-alkane in an anhydrous and essentially aprotic medium, in the presence of at least one compound of the formula (I):

$$N[CHR_1—CHR_2—O—(CHR_3—CHR_4—O)_n—R_5]_3$$

in which

n is an integer which is greater than or equal to 0 and less than or equal to 10,

$R_1$, $R_2$, $R_3$, and $R_4$, which are identical or different, represent a hydrogen atom or an alkyl radical having from 1 to 4 carbon atoms and

$R_5$ represents a hydrogen atom, an alkyl or cycloalkyl radical having from 1 to 12 carbon atoms, a phenyl radical, a phenyl alkyl radical ($C_6H_5—C_mH_{2m}—$) or an alkyl phenyl radical ($C_mH_{2m+1}—C_6H_4—$), in which m is greater to or equal to 1 and less than or equal to 12.

2. Process according to claim 1, characterised in that the reaction is carried out in the presence of at least one compound of the formula (I) in which $R_1$, $R_2$, $R_3$ and $R_4$, which are identical or different, represent a hydrogen atom or a methyl radical.

3. Process according to claim 1 or 2, characterised in that the reaction is carried out in the presence of at least one compound of the formula (I) in which n is greater than or equal to 1 and less than or equal to 3 and $R_5$ represents a hydrogen atom or an alkyl radical having from 1 to 4 carbon atoms.

4. Process according to claim 1, characterised in that the reaction is carried out in the presence of at least one compound of the formula (I) in which n is greater than or equal to 1 and less than or equal to 3, $R_1$, $R_2$, $R_3$ and $R_4$ represent a hydrogen atom and $R_5$ represents a hydrogen atom or an alkyl radical having from 1 to 4 carbon atoms.

5. Process according to any one of the preceding claims, characterised in that the cation of the alkali metal salt of the polyphenol is chosen from the group comprising lithium, sodium, potassium and caesium cations and mixtures thereof.

6. Process according to claim 1, characterised in that the reaction is carried out using a potassium salt of at least one polyphenol, and at least one compound of the formula (I) in which $R_1$, $R_2$, $R_3$ and $R_4$ represent a hydrogen atom, $R_5$ represents a hydrogen atom or an alkyl radical having from 1 to 4 carbon atoms and n is an integer which is greater than or equal to 2 and less than or equal to 10.

7. Process according to claim 6, characterised in that the reaction is carried out in the presence of tris(3,6,9-trioxadecyl)-amine.

8. Process according to claim 1, characterised in that the reaction is carried out using a sodium salt of at least one polyphenol, and at least one compound of the formula (I) in which $R_1$, $R_2$, $R_3$ and $R_4$ represent a hydrogen atom, $R_5$ represents a hydrogen atom or an alkyl radical having from 1 to 4 carbon atoms and n is greater than or equal to 1 and less than or equal to 10.

9. Process according to claim 8, characterised in that the reaction is carried out in the presence of a compound chosen from amongst tris-(3-oxa-5-hydroxypentyl)-amine, tris-(3,6-dioxaheptyl)-amine, tris-(3,6-dioxaoctyl)-amine and tris-(3,6-trioxadecyl)-amine.

10. Process according to any one of the preceding claims, characterised in that the polyphenol is a diphenol.

11. Process according to claim 10, characterised in that the diphenol is chosen from the group comprising bisphenol-A, bisphenol-F, 2,2-bis-(4-hydroxyphenyl)-1,1-dichloroethylene and 2,2-bis-(3,5-dibromo-4-hydroxyphenyl)-propane.

12. Process according to claim 11, characterised in that the polyphenol is chosen from the group comprising bisphenol-A, bisphenol-F and mixtures thereof.

13. Process according to claim 12, characterised in that the polyphenol is bisphenol-A.

14. Process according to any one of the preceding claims, characterised in that the 1-halogeno-2,3-epoxyalkane is epichlorhydrin.

15. Process according to any one of the preceding claims, characterised in that the reaction is carried out in the presence of 1 to 13 mols of 1-halogeno-2,3-epoxyalkane per gram equivalent of OM' groups originating from the salt of the alkali metal M' of the polyphenol.

16. Process according to any one of the preceding claims, characterised in that from 0.05 to 5 equivalents of compounds of the formula (I) are used per 100 equivalents of OM' groups derived from an alkali metal salt of the polyphenol.

17. Process according to any one of the preceding claims, characterised in that the reaction is carried out in the presence of a polar aprotic organic compound chosen from the group comprising acetonitrile, dimethylformamide, dimethylacetamide, dimethyl sulphoxide, dipropyl sulphoxide, propionitrile, benzonitrile, ethylene sulphide, N-methylpyrrolidone and tetramethylenesulphone.

18. Process according to Claim 17, characterised in that the reaction is carried out in the presence of acetonitrile.

19. Process according to claim 17 or 18, characterised in that the reaction is carried out in the presence of 1 to 3 mols of 1-halogeno-2,3-epoxyalkane per gram equivalent of OM' groups originating from the alkali metal salt of the polyphenol.

20. Process according to any one of the preceding claims, characterised in that the reaction temperature is between 50 and 150 °C.

**Ansprüche**

1. Verfahren zur Herstellung von Glycidylpolyethern von Polyphenolen durch Umsetzung mindestens eines Alkalisalzes von Polyphenol mit mindestens einem 1-Halogen-2,3-epoxyalkan in wasserfreiem und deutlich aprotischen Medium in Gegenwart mindestens einer Verbindung der Formel (I) :

$$N[CHR^1—CHR^2—O—(CHR^3—CHR^4—O)_n—R^5]_3$$

in der

n eine ganze Zahl größer oder gleich 0 und kleiner oder gleich 10 ist.

$R^1$, $R^2$, $R^3$ und $R^4$ gleich oder verschieden sind und jeweils ein Wasserstoffatom oder eine Alkylgruppe mit 1 bis 4 Kohlenstoffatomen und

$R^5$ ein Wasserstoffatom, eine Alkyl- oder Cycloalkylgruppe mit 1 bis 12 Kohlenstoffatomen, eine Phenylgruppe, eine Phenylalkylgruppe ($C_6H_5—C_mH_{2m}—$) oder eine Alkylphenylgruppe ($C_mH_{2m+1}—C_6H_4—$), bei denen m größer oder gleich 1 und kleiner oder gleich 12 ist, bedeuten.

2. Verfahren nach Anspruch 1, dadurch gekennzeichnet, daß man in Gegenwart mindestens einer Verbindung der Formel (I) arbeitet, in der $R^1$, $R^2$, $R^3$ und $R^4$ gleich oder verschieden sind und ein Wasserstoffatom oder eine Methylgruppe bedeuten.

3. Verfahren nach Anspruch 1 oder 2, dadurch gekennzeichnet, daß man in Gegenwart mindestens einer Verbindung (I) arbeitet, in der n größer oder gleich 1 und kleiner oder gleich 3 ist und $R^5$ ein Wasserstoffatom oder eine Alkylgruppe mit 1 bis 4 Kohlenstoffatomen bedeutet.

4. Verfahren nach Anspruch 1, dadurch gekennzeichnet, daß man in Gegenwart mindestens einer Verbindung der Formel (I) arbeitet, in der n größer oder gleich 1 und kleiner oder gleich 3 ist, $R^1$, $R^2$, $R^3$ und $R^4$ Wasserstoffatome und $R^5$ ein Wasserstoffatom oder eine Alkylgruppe mit 1 bis 4 Kohlenstoffatomen bedeuten.

5. Verfahren nach einem der vorhergehenden Ansprüche, dadurch gekennzeichnet, daß das Kation des Alkalisalzes von Polyphenol ausgewählt ist aus der Gruppe, bestehend aus den Kationen von Lithium, Natrium, Kalium und Cesium sowie deren Gemischen.

6. Verfahren nach Anspruch 1, dadurch gekennzeichnet, daß man ein Kaliumsalz von mindestens einem Polyphenol und mindestens eine Verbindung der Formel (I) anwendet, in der $R^1$, $R^2$, $R^3$ und $R^4$ ein Wasserstoffatom, $R^5$ ein Wasserstoffatom oder eine Alkylgruppe mit 1 bis 4 Kohlenstoffatomen und n eine ganze Zahl größer oder gleich 2 und kleiner oder gleich 10 bedeuten.

7. Verfahren nach Anspruch 6, dadurch gekennzeichnet, daß man in Gegenwart von Tris(3,6,9-trioxadecyl)amin arbeitet.

8. Verfahren nach Anspruch 1, dadurch gekennzeichnet, daß man ein Natriumsalz mindestens eines Polyphenols und mindestens eine Verbindung der Formel (I) verwendet, in der $R^1$, $R^2$, $R^3$ und $R^4$ Wasserstoffatome, $R^5$ ein Wasserstoffatom oder eine Alkylgruppe mit 1 bis 4 Kohlenstoffatomen bedeuten und n größer oder gleich 1 und kleiner oder gleich 10 ist.

9. Verfahren nach Anspruch 8, dadurch gekennzeichnet, daß man in Gegenwart einer Verbindung arbeitet ausgewählt aus Tris(3-oxa-5-hydroxypentyl)amin, Tris(3,6-dioxaheptyl)-amin, Tris(3,6-dioxaoctyl)amin und Tris(3,6,9-trioxadecyl)amin.

10. Verfahren nach einem der vorhergehenden Ansprüche, dadurch gekennzeichnet, daß das Polyphenol ein Diphenol ist.

11. Verfahren nach Anspruch 10, dadurch gekennzeichnet, daß das Diphenol ausgewählt ist aus der Gruppe bestehend aus Bisphenol A, Bisphenol F, 2,2-Bis(4-hydroxyphenyl)-1,1-dichlorethylen und 2,2-Bis(3,5-dibrom-4-hydroxyphenyl)-propan.

12. Verfahren nach Anspruch 11, dadurch gekennzeichnet, daß das Polyphenol ausgewählt ist aus der Gruppe bestehend aus Bisphenol A, Bisphenol F und deren Gemischen.

13. Verfahren nach Anspruch 12, dadurch gekennzeichnet, daß das Polyphenol Bisphenol A ist.

14. Verfahren nach einem der vorhergehenden Ansprüche, dadurch gekennzeichnet, daß das 1-Halogen-2,3-epoxyalkan Epichlorhydrin ist.

15. Verfahren nach einem der vorhergehenden Ansprüche, dadurch gekennzeichnet, daß man in Gegenwart von 1 bis 13 mol 1-Halogen-2,3-epoxyalkan pro g-Äq. der Gruppe OM' arbeitet, die von dem Salz des Alkalimetalls M' des Polyphenols stammt.

16. Verfahren nach einem der vorhergehenden Ansprüche, dadurch gekennzeichnet, daß man 0,05 bis 5 Äq. der Verbindungen der Formel (I) auf 100 Äq. der Gruppen OM' aus dem Alkalisalz des Polyphenols verwendet.

17. Verfahren nach einem der vorhergehenden Ansprüche, dadurch gekennzeichnet, daß man in Gegenwart einer organischen, aprotischen polaren Verbindung arbeitet, ausgewählt aus der Gruppe Acetonitril, Dimethylformamid, Dimethylacetamid, Dimethylsulfoxid, Dipropylsulfoxid, Propionitril, Benzonitril, Ethylensulfid, N-Methylpyrrolidon und Tetramethylensulfon.

18. Verfahren nach Anspruch 17, dadurch gekennzeichnet, daß man in Gegenwart von Acetonitril arbeitet.

19. Verfahren nach Anspruch 17 oder 18, dadurch gekennzeichnet, daß man in Gegenwart von 1 bis 3 mol 1-Halogen-2,3-epoxyalkan pro g-Äq. der Gruppen OM' aus dem Alkalisalz des Polyphenols arbeitet.

20. Verfahren nach einem der vorhengehenden Ansprüche, dadurch gekennzeichnet, daß die Reaktionstemperatur zwischen 50 und 150 °C liegt.